# EUROPÄISCHE PATENTANMELDUNG

(11) **EP 2 630 855 A1**
(43) Veröffentlichungstag der Anmeldung: **28.08.2013**
(21) Anmeldenummer: 13401015.6
(22) Anmeldetag: 26.02.2013
(51) Int. Cl.: A01C 7/08

(54) **Kontrollsystem zur Überwachung einer Fahrgasseneinrichtung**

(30) Priorität: 27.02.2012 DE 102012101531
(71) Anmelder: Amazonen-Werke H. Dreyer GmbH & Co. KG, 49205 Hasbergen (DE)
(72) Erfinder: Wilken, Martin, 26123 Oldenburg (DE)

(57) **Zusammenfassung**

Kontrollsystem zur Überwachung einer Fahrgasseneinrichtung einer landwirtschaftlichen pneumatischen Sämaschine mit einem mehrere Abgangsstutzen (3, 3') aufweisenden Verteilerkopf (1), wobei die Fahrgasseneinrichtung einigen Abgangsstutzen (3') des Verteilerkopfes (1) zugeordnete Absperrelemente (4) zum periodischen Absperren der Saatgutzuführung zu den den Fahrgassensäscharen zugeordneten Abgangsstutzen (3') aufweist, wobei den Absperrelementen (4) des Kontrollsystems Sensoren (8) zugeordnet sind, die ein für die jeweilige Absperr- oder Öffnungsstellung der Absperrelemente (4) repräsentatives Signal erzeugen und diese über eine Signalübermittlungseinrichtung (11) an eine Auswerte- und Anzeigevorrichtung (12) übermitteln. Um ein einfaches und preiswertes Kontrollsystem für eine Fahrgasseneinrichtung vorzuschlagen, ist vorgesehen, dass alle den Absperrelementen (4) zugeordneten Sensoren als Reedschalter (8) ausgebildet sind, und dass die Signalübermittlungseinrichtung (11) als eine gemeinsame Signalleitung ausgebildet ist.

## Beschreibung

Die Erfindung betrifft ein Kontrollsystem zur Überwachung einer Fahrgasseneinrichtung gemäß des Oberbegriffes des Patentanspruches 1.

Ein derartiges Kontrollsystem zur Überwachung einer Fahrgasseneinrichtung ist in der EP 0 189 789 B1 beschrieben. Dieses Kontrollsystem zur Überwachung der Fahrgasseneinrichtung weist Sensoren auf, die den Saatfluss in den den Fahrgassen zugeordneten Säscharen oder Säleitungen überwachen. Derartige Sensoren sind aufwändig und teuer.

Der Erfindung liegt die Aufgabe zu Grunde, ein einfaches und preiswertes Kontrollsystem für eine Fahrgasseneinrichtung vorzuschlagen.

Diese Aufgabe wird erfindungsgemäß dadurch gelöst, dass alle den Absperrelementen zugeordneten Sensoren als Reedschalter ausgebildet sind, und dass die Signalübermittlungseinrichtung als eine gemeinsame Signalleitung ausgebildet ist.

Infolge dieser Maßnahme werden robuste Reedschalter eingesetzt, die direkt die Stellung der Absperrelemente, vorzugsweise die Freigabestellung der Absperrelemente, in welcher die zu den Fahrgassensäscharen führende Saatleitung nicht abgesperrt wird, ermitteln.

In einer einfachsten Ausgestaltung des Kontrollsystems ist vorgesehen, dass die Reedschalter derart an der gemeinsamen Signalleitung angeschlossen sind, dass die Reedschalter in Reihe geschaltet sind. Hier wird dann bereits ein Fehler gemeldet, wenn nicht alle Absperrelemente sich in der definierten Position befinden.

In einer anderen Ausführungsform ist vorgesehen, dass die Signalleitung, an die die Reedschalter angeschlossen sind, eine Datenbusleitung ist. Hierdurch ist es möglich, dass das fehlerhaft eingestellte Absperrelement auf einem Anzeigeelement des Kontrollsystems exakt anzeigbar ist.

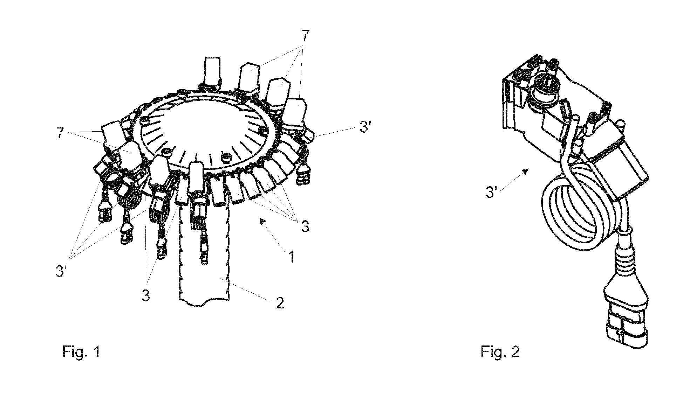

Weitere Einzelheiten der Erfindung sind der Beispielsbeschreibung zu entnehmen. Die Zeichnungen zeigen
- Fig.1: den auf einem Steigrohr angeordneten Verteilerkopf in perspektivischer Darstellung,
- Fig.2: einen an dem Verteilerkopf angeordneten Abgangsstutzen mit Absperrelement in perspektivischer Darstellung und vergrößertem Maßstab,

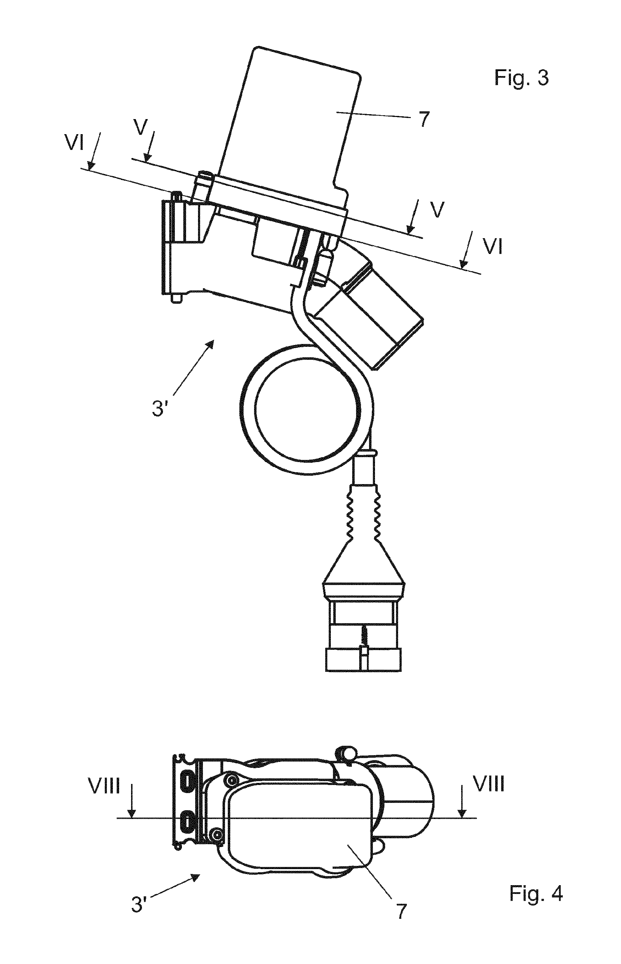

- Fig.3: den Abgangsstutzen gemäß Fig. 2 in Seitenansicht,
- Fig.4: den Abgangsstutzen gemäß Fig. 2 in Draufsicht,
- Fig.5: den Abgangsstutzen gemäß Fig. 2 im Schnitt V - V,
- Fig.6: den Abgangsstutzen gemäß Fig. 2 im Schnitt VI - VI, wobei das Absperrelement sich in Öffnungsstellung befindet,
- Fig.7: den Abgangsstutzen gemäß Fig. 2 im Schnitt VI - VI, wobei das Absperrelement sich in Absperrstellung befindet,
- Fig.8: den Abgangsstutzen gemäß Fig. 2 im Schnitt VIII - VIII,

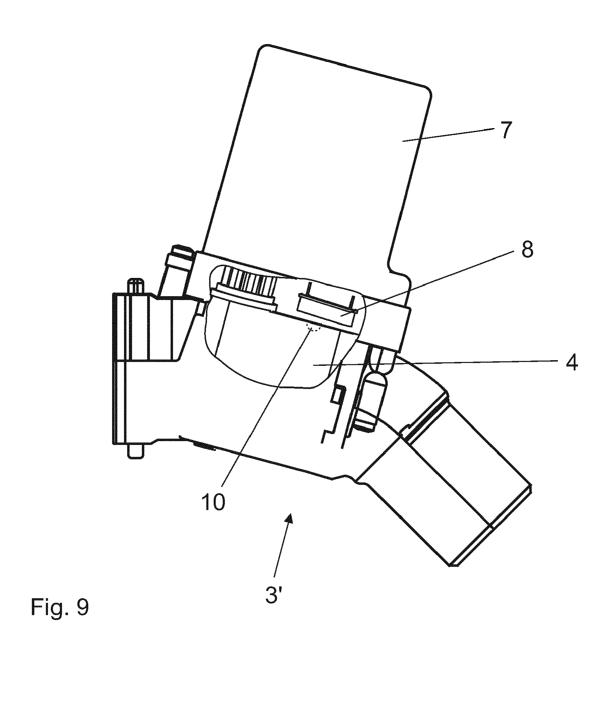

- Fig. 9: den Abgangsstutzen in Seitenaussicht und Teilschnitt,
- Fig.10: einen Schaltplan, bei dem die Reedschalter in Reihe geschaltet sind und

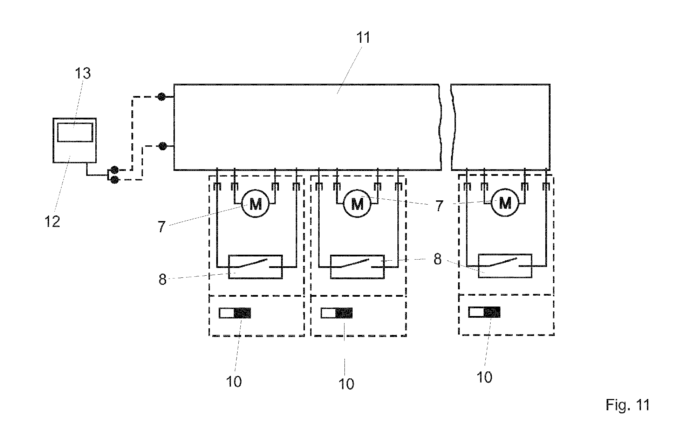

- Fig.11: einen Schaltplan, bei dem die Reedschalter in an eine Datenbusleitung angeschlossen sind.

Der Verteilerkopf 1 ist für eine pneumatische Verteilmaschine, insbesondere Sämaschine vorgesehen. Der Verteilerkopf 1 ist auf dem Steigrohr 2 angeordnet. Das Steigrohr 2 ist in nicht dargestellter Weise an ein einen Luftstrom erzeugendes Gebläse sowie an eine das von einem Dosierorgan dosierte Material in den Luftstrom einschleusenden Schleuse angeschlossen, die die Fördereinrichtung bilden. Über die nicht dargestellte Dosiereinrichtung wird dem Steigrohr 2 und dem Verteilerkopf 1 in Verbindung mit dem Luftstrom in bekannter und daher nicht näher dargestellter Weise Saatgut oder Dünger aus einem Vorratsbehälter zugeführt.

An dem Verteilerkopf sind als Stutzen ausgebildete Abgangsstutzen 3 in gleichmäßiger Aufteilung angeordnet. An den Abgangsstutzen 3 sind zu den Säscharen führende Saatleitungen angeschlossen. Einigen Abgangsstutzen 3'sind Absperrelemente 4 zum periodischen Absperren der Saatgutzuführung zu den sogenannten Fahrgassensäscharen zugeordnet.

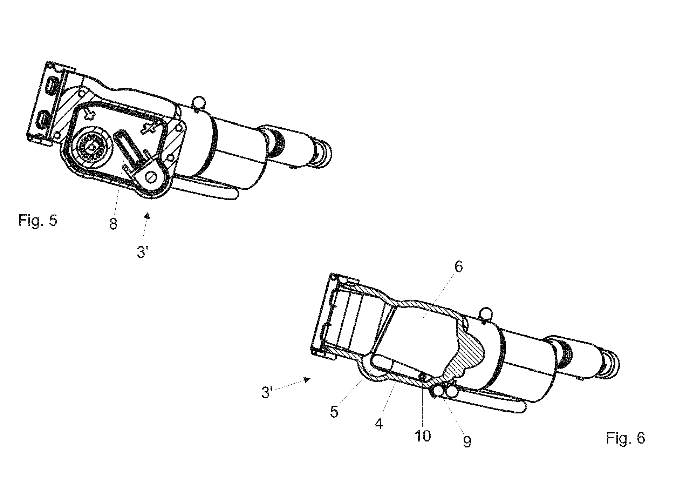

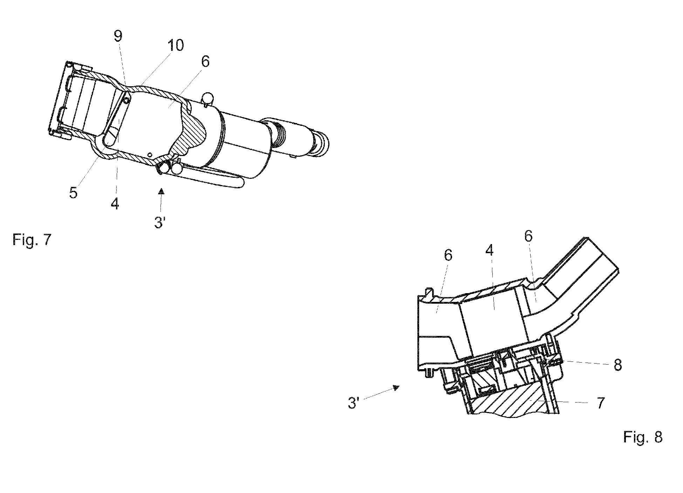

Das jeweilige als Schwenkklappe 4 ausgebildete Absperrelement ist mittels eines Gelenkbolzens 5 verschwenkbar in der Durchgangsleitung 6 des Abgangsstutzens 3' angeordnet. Das eine Ende des Gelenkbolzens 5 ist mit einem Elektromotor 7 verbunden. Mittels dieses Elektromotors 7 kann die Schwenkklappe 4 wahlweise in die in Fig.6 dargestellte Öffnungsstellung, in welcher die Schwenkklappe 4 die Durchgangsleitung 6 des Abgangsstutzens 3' freigibt, und in die in Fig. 7 dargestellte Absperrstellung, in welcher die Schwenkklappe 4 die Durchgangsleitung 6 des Abgangsstutzens 3' abgesperrt, so dass den Fahrgassensäscharen kein Saatgut zugeführt wird, gebracht werden.

Zur Überwachung der Position der Schwenkklappe 4 ist den Abgangsstutzen 3', denen ein als Schwenkklappe 4 ausgebildetes Absperrelement zugeordnet ist, ein Reedschalter 8 in dem Gehäuse des Abgangsstutzens 3' angeordnet. Auf der dem Reedschalter 8 zugewandten Seite der Schwenklappe 4 ist in der Schwenkklappe 4 auf der dem Gelenkbolzen 5 abgewandten Seite 9 ein Magnetelement 10 angeordnet. Hierbei ist der Reedschalter 8 so angeordnet, dass er sich bei sich in Öffnungsposition befindlicher Schwenkklappe 4 im Schaltbereich des Reedschalters 8 über dem in der Schwenkklappe angeordneten Magnetelement befindet.

Mittels der als Sensoren ausgebildeten Reedschalter kann somit die Öffnungsposition der Schwenkklappe 4 gemäß Fig. 6 überwacht werden. Die Reedschalter 8 sind an eine mit einer Auswerte- und Anzeigevorrichtung verbundenen Signalübermittlungseinrichtung 11, die als gemeinsame Signalleitung ausgebildet ist, angeschlossen. Wenn das Magnetelement 10 sich im Schaltbereich des Reedschalters 8 befindet, wird der Reedschalter 8 derart geschaltet, dass er ein Signal an eine Auswerte- und Anzeigevorrichtung, die beispielsweise als Bordrechner 12 ausgebildet sein kann, übermittelt.

Wenn der Bordrechner zum Nichtanlegen von Fahrgassen die Elektromotoren 7 so angesteuert hat, dass die Elektromotoren 7 die jeweiligen Schwenkklappen 4 in die Öffnungsposition gemäß Fig.6 geschwenkt hat, müssen die Reedschalter 8 durch das der jeweiligen Schwenkklappe 4 zugeordnete Magnetelement 10 geschaltet sein, so dass ein Signal an den Bordrechner 12 übermittelt wird.

Wenn der Bordrechner 11 zum Anlegen von Fahrgassen die Elektromotoren 7 so angesteuert hat, dass die Elektromotoren 7 die jeweiligen Schwenkklappen 4 in die Absperrposition gemäß Fig.7 geschwenkt hat, müssen die Reedschalter 8 durch das der jeweiligen Schwenkklappe 4 zugeordnete Magnetelement 10 geschaltet sein, so dass kein Signal an den Bordrechner übermittelt wird.

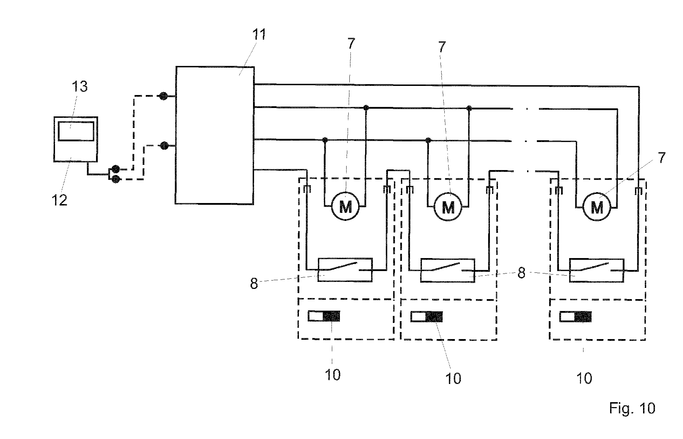

Hierbei ist eine erste Schaltung derart aufgebaut, dass die Reedschalter in die gemeinsame Signalleitung 11 in Reihe geschaltet sind, wie Fig. 10 zeigt. Falls nicht alle Schwenkklappen 8 in dem Fall, dass keine Fahrgassen angelegt werden sollen, sich nicht in der Öffnungsstellung befinden, löst die sich jeweils nicht in Öffnungsstellung befindliche Schwenkklappe 4 keine entsprechende Schaltung des Reedschalters 8 aus, so dass, weil ein Reedschalter 8 nicht geschlossen ist, kein Signal an den Bordrechner 12 übermittelt wird. Dies wird von den Bordrechner 12 bei der Vorgabe "Nichtanlegen von Fahrgassen" als Fehler interpretiert und entsprechend auf der Anzeigevorrichtung 13 des Bordrechners 12 angezeigt.

Hierbei ist eine zweite Schaltung derart aufgebaut, dass die Reedschalter an die gemeinsame Signalleitung, die als Datenbusleitung ausgebildet ist, angeschlossen sind, wie Fig. 10 zeigt. Falls nicht alle Schwenkklappen 4 in dem Fall, dass Fahrgassen angelegt werden sollen, sich in der Absperrstellung befinden, lösen die sich in Absperrstellung befindlichen Schwenkklappen 4 keine entsprechende Schaltung des jeweils zugeordneten Reedschalters 4 aus, so dass von den Reedschaltern 8, die den sich in Absperrstellung befindlichen Schwenkklappe 4 zugeordnet sind, kein Signal an den Bordrechner 12 übermittelt wird. Dies wird von den Bordrechner bei der Vorgabe "Anlegen von Fahrgassen" als korrekt interpretiert und entsprechend auf der Anzeigevorrichtung angezeigt. Falls sich eine Schwenkklappe 4 bei der Vorgabe "Nichtangelegen von Fahrgassen" in Öffnungsstellung gemäß Fig. 6 und nicht in Absperrstellung gemäß Fig. 7 befindet, wird von dem Magnetelement 10 der Reedschalter 8 geschaltet, so dass ein Signal an den Bordrechner 12 übermittelt wird. Dies wird als Fehler interpretiert und entsprechend auf der Anzeigevorrichtung 13 des Bordrechners 12 mit Angabe der sich nicht in korrekter Stellung befindlichen Schwenkklappe 4angezeigt.

## Patentansprüche

1. Kontrollsystem zur Überwachung einer Fahrgasseneinrichtung einer landwirtschaftlichen pneumatischen Sämaschine mit einem mehrere Abgangsstutzen aufweisenden Verteilerkopf, wobei die Fahrgasseneinrichtung einigen Abgangsstutzen des Verteilerkopfes zugeordnete Absperrelemente zum periodischen Absperren der Saatgutzuführung zu den den Fahrgassensäscharen zugeordneten Abgangsstutzen aufweist, wobei den Absperrelementen des Kontrollsystems, die ein für die jeweilige Absperr- oder Öffnungsstellung der Absperrelemente repräsentatives Signal erzeugen und diese über eine Signalübermittlungseinrichtung an eine Auswerte- und Anzeigevorrichtung übermitteln, **dadurch gekennzeichnet, dass** alle den Absperrelementen (4) zugeordneten Sensoren als Reedschalter (8) ausgebildet sind, und dass die Signalübermittlungseinrichtung (11) als eine gemeinsame Signalleitung ausgebildet ist.

2. Kontrollsystem nach Anspruch 1, **dadurch gekennzeichnet, dass** die Reedschalter derart an der gemeinsamen Signalleitung (11) angeschlossen sind, dass die Reedschalter (8) in Reihe geschaltet sind.

3. Kontrollsystem nach Anspruch 1, **dadurch gekennzeichnet, dass** die Signalleitung (11), an die die Reedschalter (8) angeschlossen sind, eine Datenbusleitung ist.
